# EUROPEAN PATENT SPECIFICATION

(11) **EP 3 871 488 B1**
(45) Date of publication and mention of the grant of the patent: **29.11.2023**
(21) Application number: 20208767.2
(22) Date of filing: 19.11.2020
(51) Int. Cl.: A01D 34/64, A01D 34/81, A01D 67/02

(54) **RIDING WORK MACHINE**
AUFSITZARBEITSMASCHINE
MACHINE DE TRAVAIL AUTOPORTÉE

(30) Priority: 25.02.2020 JP 2020029379
(43) Date of publication of application: 01.09.2021
(73) Proprietor: Kubota Corporation, Osaka-shi, Osaka 556-8601 (JP)
(72) Inventor: ONO, Kohei, SAKAI-SHI, OSAKA, 5900823 (JP); HIROTSU, Yuki, SAKAI-SHI, OSAKA, 5900823 (JP); FUJII, Yasuhiro, SAKAI-SHI, OSAKA, 5900823 (JP)
(74) Representative: Cabinet Beau de Loménie

(56) References cited:
- EP-A1- 3 453 246
- JP-A- 2011 188 789
- JP-A- 2019 047 746
- US-A1- 2012 186 887

## Description

### Technical Field

The present invention relates to a riding work machine including a vehicle body frame supported by a pair of left and right front wheels and a pair of left and right rear wheels, a deck panel mounted on the vehicle body frame, a driving section having a driver's seat at a front portion of the vehicle body frame and upwardly of the deck panel, and an engine section having an engine accommodated in a hood at a rear portion of the vehicle body frame.

### Background Art

As a riding work machine described above, conventionally, there is one described in Patent Document 1 for example, which includes an engine section having an engine accommodated in a hood provided at a rear portion of the vehicle body frame and implement such as a mower device disposed forwardly of the driving section. In the case of this arrangement, it has been generally practiced to provide, inside the hood accommodating the engine, a starter device or an electric component such as a fuse box, etc., though not shown. Further, in such riding work machine as above, upwardly of the hood, another device such as a grass collector may sometimes be mounted as an option.

### Prior Art Document

### Patent Document

Patent Document 1: Japanese Unexamined Patent Application Publication No. 2014-161287 (see paragraph [0029] and Fig. 9 of the drawings). JP 2019 047746 A, EP 3 453 246 A1, US 2012/186887 A1 and JP 2011 188789 A disclose other examples of riding work machines.

### Disclosure of the Invention

### Problems to be Solved by the Invention

As described above, among the riding work machine having an engine accommodated in a hood, there are some in which another device such as a grass collector may be optionally mounted upwardly of the hood. This arrangement is advantageous in that the space upwardly of the hood can be utilized as a place for mounting the grass collector. However, the arrangement suffers a problem as follows.

Namely, the arrangement is inconvenient in that in the course of a work using the implement such as a mower or the like, even if the fuse is blown off, it is not readily possible to open the inside of the hood for inspection.

The object of the present invention is to provide a riding work machine configured such that an electric component is disposed outside the hood to provide access to the electric component without need to open/close the hood and to allow a space under a deck panel to be effectively utilized.

### Solution

A riding work machine according to the present invention is defined in claim 1, and comprises:
a vehicle body frame supported by a pair of left and right front wheels and a pair of left and right rear wheels;
a deck panel mounted on the vehicle body frame;
a driving section having a driver's seat disposed at a front portion of the vehicle body frame and upwardly of the deck panel; and
an engine section having an engine accommodated in a hood at a rear portion of the vehicle body frame;
wherein various electric components are disposed under the deck panel at a laterally outer portion of the vehicle body frame and within a spacing between the front wheels and the rear wheels in a front/rear direction; and
wherein between the front wheels or the rear wheels and the electric components, there is provided a shielding member configured to suppress falling of scattering water splashed from the front wheels or the rear wheels.

With the present invention, various electric components are disposed under the deck panel at a laterally outer portion of the vehicle body frame and within a spacing between the front wheels and the rear wheels in a front/rear direction. Therefore, the arrangement allows layout of various kinds of electric components, without interfering with disposing of various members such as a transmission shaft which is to be disposed within the left/right spacing of the vehicle body frame. The arrangement does not limit the space on the deck panel, either. Namely, the electric components can be disposed under the deck panel at a laterally outer portion of the vehicle body frame and within a spacing between the front wheels and the rear wheels in a front/rear direction, namely, in a condition that makes it easy to avoid contact with an object, since the machine body inner side and the front and rear sides are surrounded by the vehicle body frame and the front and rear wheels.

With the present invention, as described above, it has become possible to dispose electric components with effective utilization of a dead space available under the deck panel. With this, even if an additional device such as a grass collector is disposed on the hood of the engine section, maintenance and inspection of the electric components can be carried out easily without need to open/close the hood.

However, mere disposing of the electric components at this place does not eliminate the risk of scattering water splashed from the front wheels or rear wheels falling onto the electric components. Then, according to the present invention, between the front wheels or the rear wheels and the electric components, there is provided a shielding member configured to suppress falling of scattering water splashed from the front wheels or the rear wheels. This arrangement provides an additional advantage of making it easy to avoid the inconvenience of scattering water falling onto the electric components.

According to the present invention:
a battery support portion is provided under the deck panel at the laterally outer portion of the vehicle body frame and within the spacing between the front wheels and the rear wheels in the front/rear direction; and
the shielding member is located at a portion overlapped with the battery support portion as seen in the plan view and seen in the front/rear direction, and the electric component is disposed between the deck panel and the battery support portion disposed downwardly thereof.

With the above-described arrangement, in addition to the electric component, the battery too can be disposed with effective utilization of the dead space available under the deck panel.

And, the electric component is disposed between the deck panel and the battery support portion. The shielding member is located at a portion overlapped with the battery support portion as seen in the plan view and seen in the front/rear direction. Therefore, the shielding member can serve also to suppress falling of scattering water onto the upper side of the battery and the battery support portion can serve also to suppress falling of scattering water to the lower side of the electric components.

In the present invention, preferably:
an upper portion of the shielding member is supported to an attachment member fixed to the vehicle body frame; and
a lower portion of the shielding member is fixedly coupled with the battery support portion.

With the above-described arrangement, the upper portion of the shielding member is firmly supported by an attachment member which is fixed to the vehicle body frame. The lower portion of the shielding member is fixedly coupled with the battery support portion. With this, the shielding member is supported in a stable manner as being held on both the upper and lower sides thereof.

In the present invention, preferably:
the shielding member includes a first vertical plate portion which is located in opposition to the font wheel or the rear wheel disposed at a position nearest the electric component, an upper plate portion which covers the electric component from above, a lower plate portion which covers the electric component from under, and a second vertical plate portion disposed at a position opposed to the first vertical plate portion across the upper plate portion and the lower plate portion therebetween;
the shielding member is supported via the second vertical plate portion to the attachment member fixed to the vehicle body frame; and
the lower plate portion is provided with a spacing relative to a battery upper face supported to the battery support portion.

With the above-described arrangement, the upper and lower sides and the front and rear sides of the electric component are covered by the shielding member, so that effective suppression of falling of scattering water can be achieved. Further, the lower plate portion is provided with a spacing relative to the battery upper face which is supported to the battery support portion. Therefore, it is possible to effectively suppress also heat propagation between the battery and the electric component, both of which are heat generating portions.

In the present invention, preferably:
the upper plate portion and the lower plate portion are formed with such obliquely inclined posture that the side thereof near the front wheel or the rear wheel is located with offset toward the machine body outer side away from the vehicle body frame as seen in a plan view, with the side thereof near the second plate portion being located with offset toward the machine body inner side near the vehicle body frame in the left/right direction and with the first vertical plate portion being located with offset toward the machine body outer side near the front wheel or the rear wheel in the left/right direction.

With the above-described arrangement, the upper plate portion and the lower plate portion are formed with such obliquely inclined posture that the side thereof near the front wheel or the rear wheel is located with offset toward the machine body outer side away from the vehicle body frame as seen in a plan view. Thus, the first vertical portion near the front wheel or the rear wheel can be disposed as close as possible to the front wheel or the rear wheel in the left/right direction also. Therefore, the left/right width of the first vertical plate portion can be formed relatively compact.

In the present invention, preferably:
at an outer circumferential edge portion of the deck panel, there is provided a pending flange portion which is bent downwards;
at a portion of the pending flange portion opposed to the electric component having the front and rear sides and the upper and lower sides thereof surrounded by the shielding member, an inspection opening portion is formed; and
to the inspection opening portion, a lid member is attached to be detachable from the machine body outer side.

With the above-described arrangement, the outer circumferential edge portion of the deck panel can be utilized as a part of the shielding member for covering the machine body outer side of the electric component. Moreover, the inspection opening portion and the lid member can be used conveniently as opening/closing means for carrying out inspection of the electric component, from the outer circumferential edge side of the deck panel.

### Brief Description of the Drawings

Fig. 1 is a side view showing a riding work machine entirely,
Fig. 2 is a plan view showing the riding work machine entirely,
Fig. 3 is a side view showing a shielding member and a battery support portion,
Fig.4 is a plan view showing the shielding member and the battery support portion,
Fig. 5 is a front view showing the shielding member and the battery support portion,
Fig. 6 is a perspective view showing the shielding member and the batter support portion,
Fig. 7 is an exploded perspective view showing the shielding member,
Fig. 8 is a perspective view showing a parking brake operation arrangement, and
Fig. 9 is a side view showing a riding work machine entirely according to a further embodiment.

### Embodiment

Next, an embodiment of the present invention will be explained with reference to the accompanying drawings.

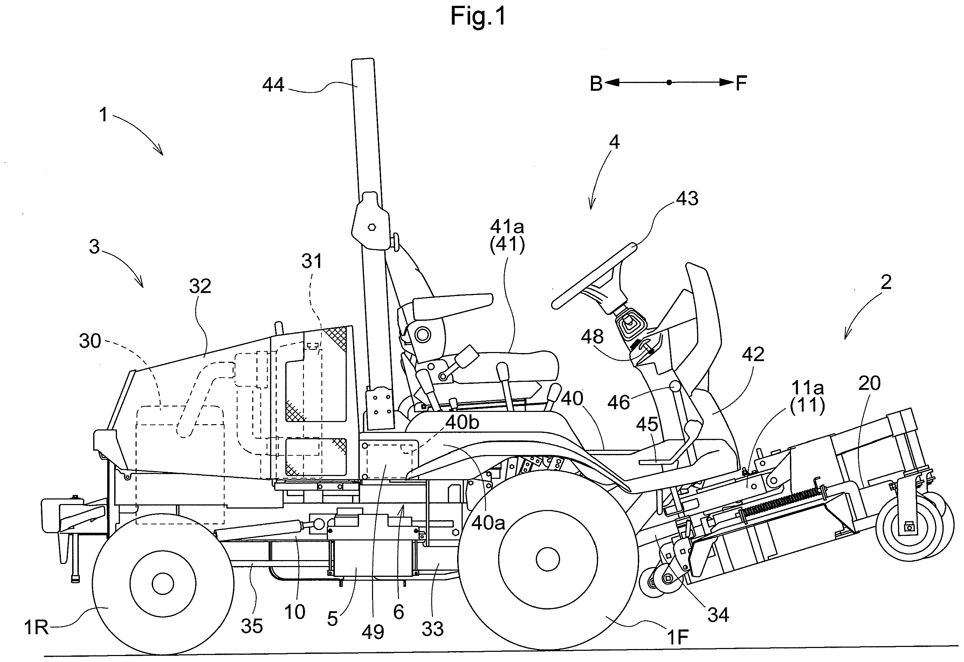

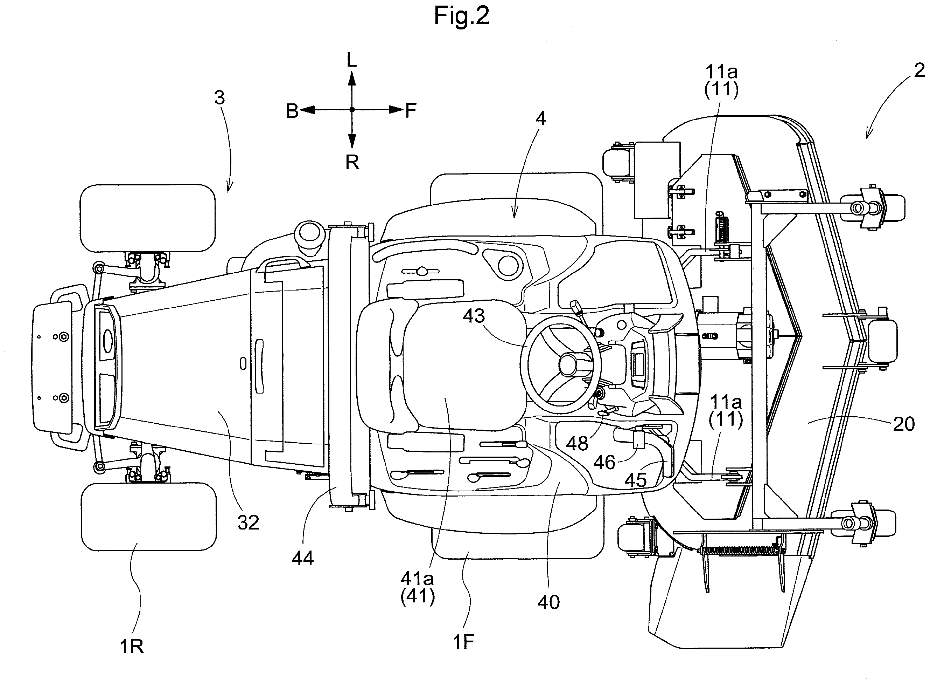

Incidentally, in the explanation of this embodiment, the front/rear direction and the left/right direction are defined as follows, unless explicitly indicated otherwise. Namely, the advancing direction on the forward traveling side of the inventive work machine during work travel is "front" (see arrow F in Figs. 1 and 2), the advancing direction on the reverse traveling side (see arrow B in Figs. 1 and 2) is "rear", and the direction corresponding to the right side relative to the forwardly oriented posture in the front/rear direction is "right" (see arrow R in Fig. 2), and similarly, the direction corresponding to the left side is "left" (see arrow L in Fig. 2).

### [General Arrangement]

Fig. 1 and Fig. 2 show a riding mower as a riding work machine relating to the present invention. This riding mower includes a traveling machine body 1 having a vehicle body frame 10 supported by a pair of left and right front wheels 1F and a pair of left and right rear wheels 1R and a mower device 2 coupled via a lift device 11 to a front side of the traveling machine body 1. Namely, this riding mower is configured as a front mower type mounting the mower device 2 on the front side of the traveling machine body 1.

The mower device 2 includes three rotary blades (not shown) which are rotated about respective axes extending along the upper/lower direction under a mower deck 20. The mower device 2 is of the side discharge type configured to discharge cut grass pieces to the right lateral side with respect to the advancing direction.

The relative height position of the mower device 2 relative to the traveling machine body 1 is vertically adjustable by the lift device 11. The lift device 11 includes a lift arm (not shown) provided at a front portion of the traveling machine body 1 and a link member 11a having its rear end side coupled to the traveling machine body 1 downwardly of the lift arm. An intermediate portion of the link member 11a in the front/rear direction is suspended from the lift arm. The mower device 2 is coupled to the front end side of the link member 11a.

Therefore, by downwardly pivoting the front end side (free end side) of the lift arm, there is provided a work posture placing the mower device 2 placed on the ground surface, whereby the mower device 2 can carry out a grass mowing work. By upwardly pivoting the front end side (free end side) of the lift arm, there is provided a suspended state with placing the mower device 2 away from the ground surface, as shown in Fig. 1, whereby the mower device 2 can be changed in its posture to a non-work posture.

In the traveling machine body 1, an engine section 3 is provided at a rear portion of the vehicle body frame 10. In the traveling machine body 1, the driving section 4 is provided more forwardly of the machine body than the engine section 3. In the engine section 3, a gasoline engine 30 as an engine (to be referred to simply as "engine" hereinafter) is mounted on the vehicle body frame 10. And, there is provided a hood 32 which covers this engine 30, a radiator 31, etc.

An output from the engine 30 is inputted to a transmission case 33 provided at a machine body front portion via a propeller shaft (not shown). Power which has been speed-changed inside the transmission case 33 is supplied to the mower device 2 located forwardly via a transmission shaft 34. Further, the power which has been speed-changed inside the transmission case 33 is supplied also to a driving system for the rear wheels 1R located rearwardly via a rear wheel drive shaft 35.

The vehicle body frame 10 includes a pair of left and right main frames 10A, 10A having a channel-like cross section and formed elongate in the front/rear direction. Front end portions of the pair of left and right main frames 10A, 10A are integrally coupled to the transmission case 33. At the rear end portions of the left and right main frames 10A, 10A, the engine 30 is mounted and coupled.

### [Driving Section]

On the more front side of the machine body than the engine section 3, a deck panel 40 is provided on the vehicle body frame 10. Upwardly of this deck panel 40, the driving section 4 is provided.

As shown in Figs. 1 and 2, the driving section 4 includes a driver's seat 41 provided on the front side of the engine section 3 and upwardly of the deck panel 40, a handle post 42 vertically mounted upwardly of the deck panel 40 forwardly of the driver's seat 41, a steering wheel 43 located at an upper portion of the handle post 42, etc.

Further, between the end portion of the hood 32 on the machine body front side and the rear portion of the driver's seat 41, a ROPS 44 is vertically mounted in such a way to circumvent the upper side of the driver's seat 41. To the vehicle body frame 10 on the left and right opposed sides of the driver's seat 41, lower end sides of the ROPS 44 are supported. The ROPS 44 has a portal shape as seen in the front view.

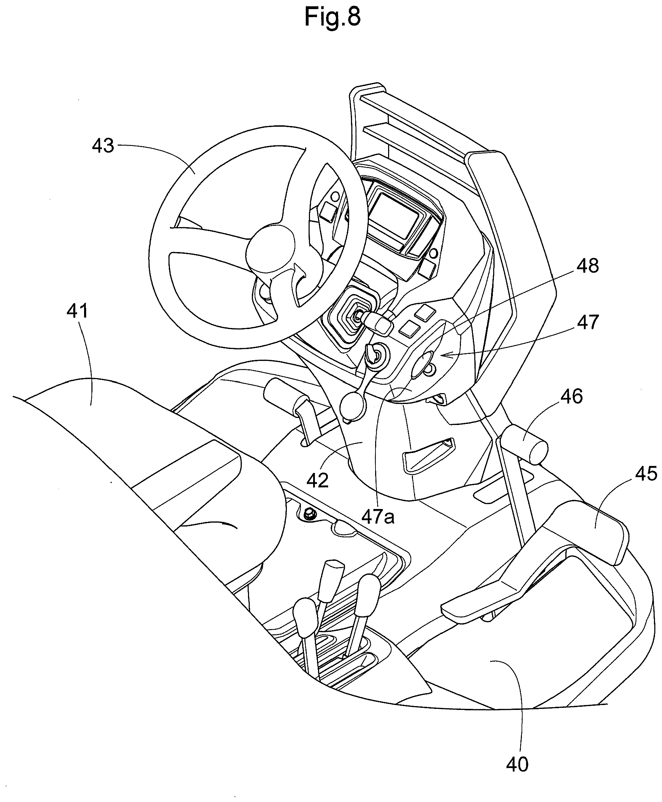

As shown in Fig. 1 and Fig. 8, on the deck panel 40 in the driving section 4, a speed changer pedal 45 and a brake operational tool 46 are provided to protrude more upwards than the upper face of the deck panel 40. The brake operational tool 46 is operably coupled to a braking device (not shown) of the traveling system provided in the traveling machine body 1 so as to be capable of braking the traveling machine body 1 by a step-on operation by an operator who is seated at the driver's seat 41.

As shown in Fig. 1, Fig. 2 and Fig. 8, a parking brake operational lever 48 is provided at a vertically intermediate position of the handle post 42.

At the vertically intermediate position of the handle post 42, there is formed a stepped recess portion 47. This stepped recess portion 47 has such a shape that a portion of the lateral face of the handle post 42 in the left/right direction is receded partially in the direction approaching the rotational center of the steering wheel 43. The parking brake operational lever 48 is provided to extend through an upwardly oriented face 47a of this stepped recess portion 47. Thus, an operator seated at the driver's seat 41 can manually pull the parking brake operational lever 48 in the direction away from or closer to the upwardly oriented face 47a. In response to this pulling operation of the parking brake operational lever 48, the brake operational tool 46 located at its stepped-on state will be locked, thus being usable as a parking brake. Since the parking brake operational lever 48 is urged for its retuning in the direction opposite to the pulling operation direction, when the pulling operation is released with detachment of the hand therefrom, the parking brake operational lever 48 will be automatically returned to its position assumed prior to the pulling operation. The lock releasing operation of the brake operational tool 46 is effected by stepping on the brake operational tool 46 again.

The upwardly oriented face 47a of the stepped recess portion 47 is located at an approximately same height as the height of a seating face 41a of the driver's seat 41. Further, this stepped recess portion 47 is provided at a position near the outer circumferential edge of the steering wheel 43 as seen in the plan view. With this, the parking brake operational lever 48 is arranged at a position that facilitates gripping by the operator.

More particularly, in the horizontal direction, the position of the stepped recess portion 47 is a position near the outer circumferential edge of the steering wheel 43, which is a portion readily accessible by the hand of the operator seated at the driver's seat 41. And, in the vertical direction, the stepped recess portion 47 is located at an approximately same height as the height of the seating face 41a of the driver's seat 41. Therefore, the parking brake operational lever 48, which is provided at the upwardly oriented face 47a of the stepped recess portion 47, is present at a position readily accessible to the operator who extends his/her hand thereto naturally as being kept seated at the driver's seat 41.

With the above arrangement, the parking brake operational lever 48 can be easily gripped to effecting a locking operation of the brake operational tool 46, without significantly changing the maneuvering posture.

### [Battery Support Portion]

In the riding mower described above, as shown in Figs. 1 and 4 through 6, a battery 50 for providing electric power to the respective electric components is provided not inside the hood 32 of the engine section 3, but outside this hood 32. Namely, a battery support portion 5 in the form of a rectangular box for storing the battery 50 therein is disposed under the deck panel 40 and at a laterally outer side of the vehicle body frame 10 on the right side between the front wheel 1F and the rear wheel 1R, thus being disposed outside the hood 32.

More particularly, in the vertical direction, the battery support portion 5 disposed downwardly of the deck panel 40 is disposed downwards with a spacing relative to the lower face of the deck panel 40 which spacing allows insertion of a shielding member 6 (to be described later) relative to the lower face of the deck panel 40. Further, in the left/right direction, the battery support portion 5 is disposed on the laterally outer side of the right vehicle body frame 10 of the pair of left and right vehicle body frames 10; and in the front/rear direction, this battery support portion 5 is disposed within the spacing between the front wheel 1F and the rear wheel 1R and at a position closer to the front wheel 1F than to the rear wheel 1R.

The battery support portion 5 includes an upwardly opened box-like main body 51 into which the battery 50 can be inserted from the upper side, a metal holder 52 which comes into contact with the upper portion outer side end portion of the battery 50 inserted to the box-like main body 51, and a fixing bolt 53 that can fasten and fix the metal holder 52 placed in contact with the upper portion outer end portion of the battery 50 to the box-like main body 51 from the diagonal direction.

In the box-like main body 51, an attachment bracket 54 is fixed to a face thereof opposed to the vehicle body frame 10. The box-like main body 51 is fixedly coupled to the lateral outer side of the vehicle body frame 10 via this attachment bracket 54.

In a front face (face opposed to the front wheel 1F) portion of the box-like main body 51, there is formed a coupling bracket 55 in the form of a forward protrusion configured to fixedly couple the lower portion of the shielding member 6 to be described later.

### [Shielding Member]

Under the deck panel 40 at the laterally outer side portion of the right vehicle body frame 10 described above and within the spacing between the front wheel 1F and the rear wheel 1R in the front/rear direction, electric components 12 such as a fuse for various kinds of devices to be controlled which are to be connected to the battery 50, are disposed via the shielding member 6.

The shielding member 6 includes a first vertical plate portion 60 located in opposition to the right front wheel 1F which is the wheel closest to the electric components 12 among the front wheel 1F and the rear wheel 1R. In addition to the first vertical plate portion 60, the shielding member 6 further includes an upper plate portion 61 for covering the electric components 12 from above, a lower plate portion 62 for covering the electric components 12 from under, and a second vertical plate portion 63. The second vertical plate portion 63 is disposed rearwardly of the first vertical plate portion 60 to be in opposition to the first vertical plate portion 60 across the upper plate portion 61 and the lower plate portion 62.

In this way, the shielding member 6 includes the first vertical plate portion 60, the upper plate portion 61, the lower plate portion 62 and the second vertical plate portion 63. And, in an electric component accommodating space S surrounded by these portions, namely, the first vertical plate portion 60, the upper plate portion 61, the lower plate portion 62 and the second vertical plate portion 63, the electric components 12 are disposed. With this arrangement, it is intended to suppress falling of scattering water splashed up by the front wheels 1F onto the electric components 12.

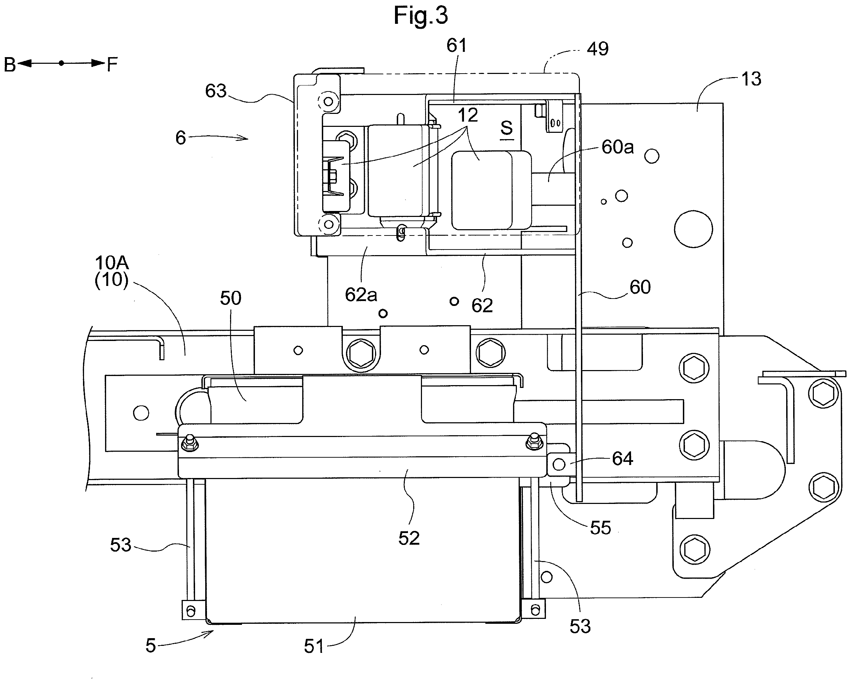

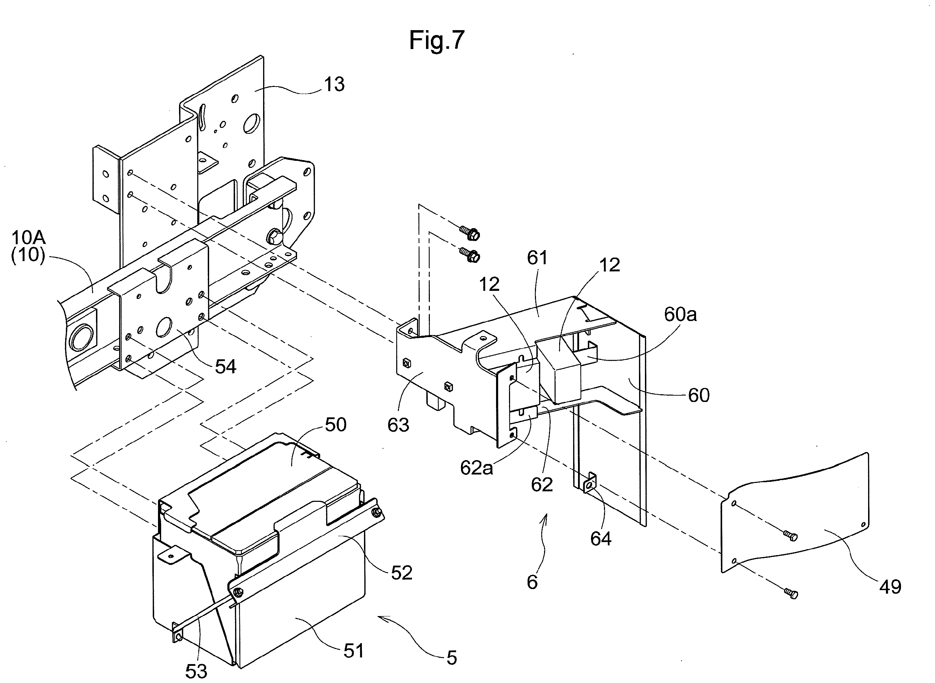

The shielding member 6, as shown in Figs. 3 through 7, is supported to the attachment member 13 via the second vertical plate portion 63. The attachment member 13 has a plate face for attachment. This attachment plate face is fixed to the right main frame 10A of the vehicle body frames 10 and extends along the front/rear direction. Under a posture orthogonal to the plate face of this attachment member 13, a machine body inner side end portion of the second vertical plate portion 63 is bolt-coupled.

Further, at a lower portion of the first vertical plate portion 60, there is formed a coupling bracket 64, in the form of a rearward protrusion, to be coupled with the battery support portion 5. This coupling bracket 64 is configured to be bolt-connectable to a coupling bracket 55 which is formed to project forwardly from the box-like main body 51 of the battery support portion 5.

Accordingly, an upper portion of the shielding member 6 is coupled to the attachment member 13 via the second vertical plate portion 63 and fixed to the main frame 10A. A lower portion of the shielding member 6 is coupled and fixed to the box-like main body 51 of the battery support portion 5 via the coupling bracket 64 provided in the first vertical plate portion 60.

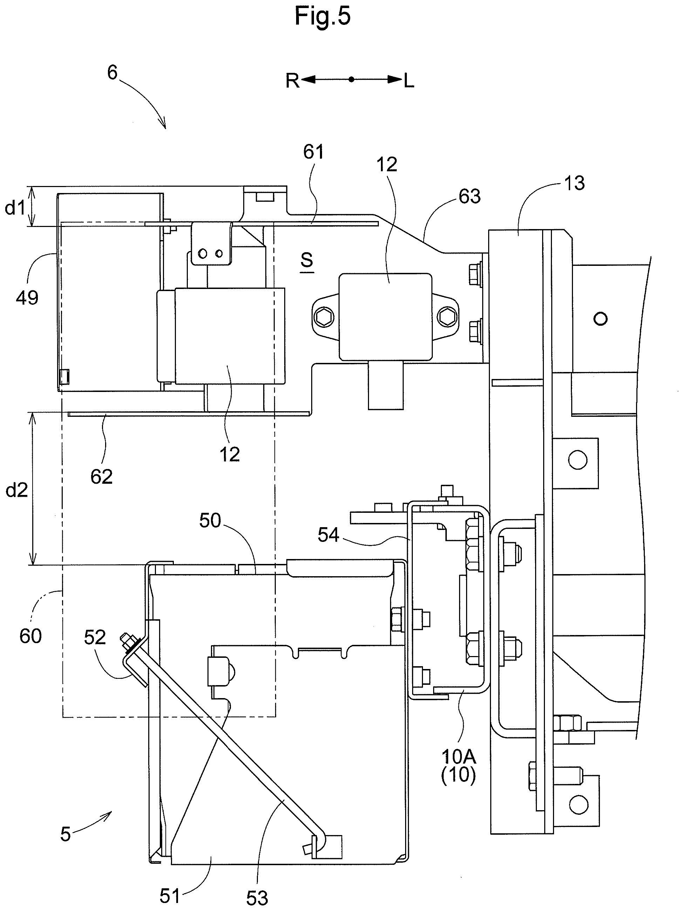

The upper plate portion 61 of the shielding member 6 is disposed at a position near the lower face of the deck panel 40. The lower plate portion 62 is provided at a position upwardly away from the upper face of the battery 50 supported to the battery support portion 5. Namely, between the lower plate portion 62 and the upper face of the battery 50, there is provided a spacing d2 which is larger than a spacing d1 between the upper plate portion 61 and the lower face of the deck panel 40. This is to make the attachment height of the electric components 12 to be attached to the upper side than the lower plate portion 62 high, thereby to increase the spacing between the battery 50 and the electric components 12 both of which can be heat generating sources, thus making it easy to reduce the heat influence therebetween (see Fig. 5).

Further, as the battery support portion 5 is present downwardly of the lower plate portion 62, this battery support portion 5 can easily serve to shield scattering water which moves from the lower side to the upper side. Therefore, even if the lower plate portion 62 of the shielding member 6 has only a small area, adherence of scattering water to the electric components 12 can be readily suppressed with effective utilization of shielding effect for scattering water moving from the lower side to the upper side provided by the battery support portion 5.

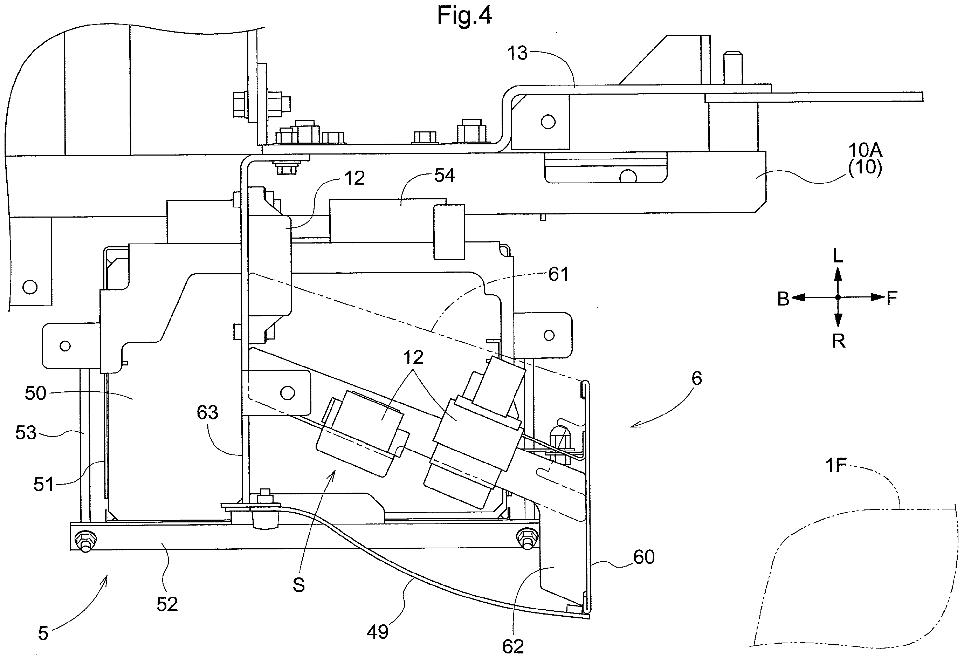

Inside the electric component accommodating space S, the electric components 12 are attached and fixed to a fixing member 60a which is caused to protrude rearwards from the upper portion of the first vertical plate portion 60, the front face of the second vertical plate portion 63 and a bent rib 62a portion of the lower plate portion 62 (see Fig. 3 and Fig. 4).

And, the left/right direction position of the first vertical plate portion 60 and the front/rear and left/right positions of the upper plate portion 61 and the lower plate portion 62 are set such that the shielding member 6 may be located at a portion overlapped with the battery support portion 5 as seen in the plan view and seen in the front/rear direction (see Figs. 3 through 5).

Further, the first vertical plate portion 60 is disposed at a position where a portion of the first vertical plate portion 60 offset toward the machine body outer side and a portion of the front wheel 1F offset toward the machine body inner side are overlapped with each other so that this first vertical plate portion 60 may be partially overlapped with the right front wheel 1F also as seen in the front/rear direction (see Fig. 1 and Fig. 4).

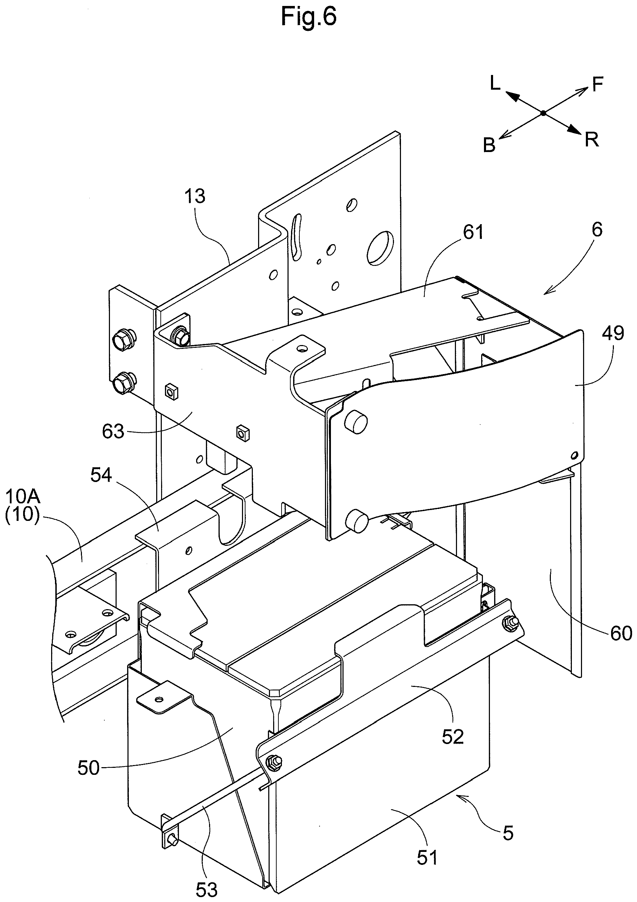

The upper plate portion 61 and the lower plate portion 62, as shown in Figs. 4 and 6, are disposed and formed with obliquely inclined posture located with offset toward the machine body outer side on its side near the front wheel 1F as seen in the plan view so that the side thereof near the second vertical plate portion 63 is disposed with offset toward the machine body inner side near the vehicle body frame 10 in the left/right direction, and the first vertical plate portion 60 is disposed with offset toward the machine body outer side near the front wheel 1F in the left/right direction.

In this way, with the above-described disposing of the upper plate portion 61 and the lower plate portion 62 with the obliquely inclined posture, scattering water from the right front wheel 1F located on the front and obliquely right side of the shielding member 6 can be shielded by the first vertical plate portion 60. In this, since the shielding member 6 is supported to the front end portions of the upper plate portion 61 and the lower plate portion 62 having the oblique posture, the left/right width can easily be formed compact, in comparison with a case in which it is caused to extend from the main frame 10A.

On the laterally outer side of the shielding member 6, there is provided, in opposition thereto, a pending flange portion 40a formed, as a downward bent portion, from the outer circumferential edge of the deck panel 40.

Of this pending flange portion 40a, at a portion thereof opposed to the electric component accommodating space S surrounded by the shielding member 6 in the front and rear sides and the upper and lower sides, an inspection opening portion 40b is formed. To the machine body outer side of this inspection opening portion 40b, there is attached a lid member 49 which can be attached/detached from the outside of the traveling machine body 1.

Therefore, by opening (exposing) the inspection opening portion 40b with detachment of the lid member 49 therefrom for instance, via the inspection opening portion 40b, an access can be made to the electric components 12 accommodated within the electric component accommodating space S from the outside of the traveling machine body 1 (see Fig. 1 and Fig. 4).

### [Other Embodiments]

(1) In the foregoing embodiment, there was disclosed the exemplary arrangement of the right front wheel 1F being the wheel closest to the electric components 12 among the front wheel 1F and the rear wheel 1R and the shielding member 6 is provided at the position opposed to this right front wheel 1F. However, the invention is not limited to this arrangement.

For instance, though not shown, in case the right rear wheel 1R is the wheel nearest the electric components 12, the first vertical plate portion 60 of the shielding member 6 may be disposed at a position opposed to the right rear wheel 1R. Similarly, in case the left front wheel 1F is the wheel nearest the electric components 12, the shielding member 6 may be disposed at a position opposed to the left front wheel 1F. Further, in case the left rear wheel 1R is the wheel nearest the electric components 12, the shielding member 6 may be disposed at a position opposed to the left rear wheel 1R.

The rest of the configuration may be same as that of the foregoing embodiment.

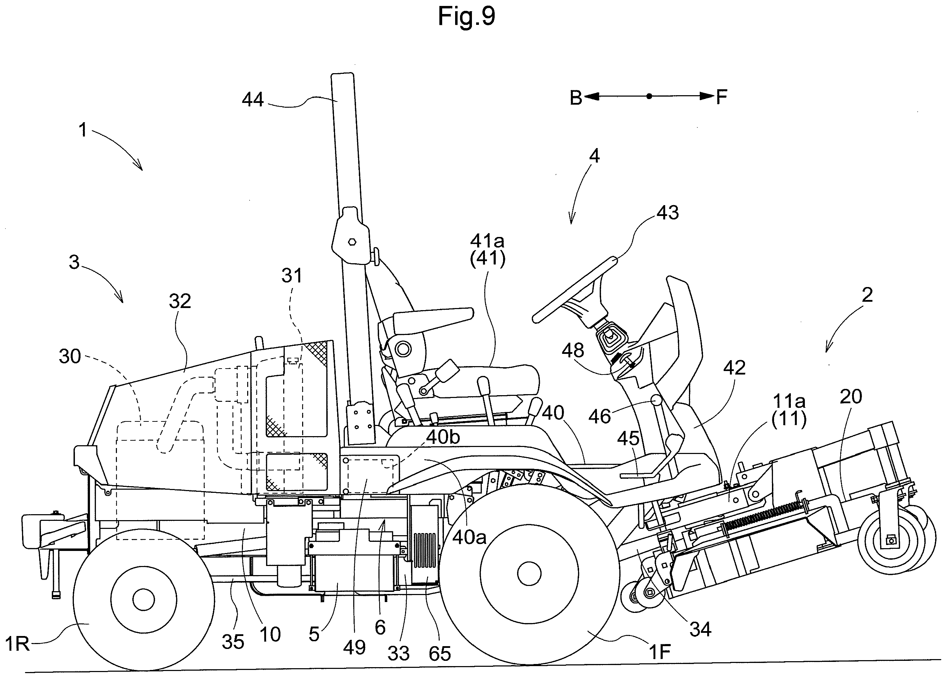

(2) In the foregoing embodiment, there was disclosed the exemplary arrangement in which the shielding member 6 is disposed at a position opposed to the front wheel 1F on the forward side. However, the invention is not limited to this arrangement. For instance, as shown in Fig. 9, between the electric component accommodating space S and the front wheel 1F, a cover case 65 for accommodating a fuel filter, a gas-liquid separator, or the like may be provided as what is supposed to function as the "shielding member" 6.

In this case, as the cover case 65 for the fuel filter, the gas-liquid separator, or the like functions also as the shielding member 6, through co-use of a same component, further simplification of the arrangement is made possible.

Incidentally, in this case, the cover case 65 and the shielding member 6 may be provided separately.

The rest of the configuration may be same as that of the foregoing embodiment.

(3) In the foregoing embodiment, as an example of the riding work machine, there was shown a riding mower of the front mower type with the mower device 2 being disposed on the front side of the machine body. However, the riding work machine is not limited to the above. For instance, the riding work machine may be a riding mower of the mid mower type with the mower device 2 being disposed between the front wheels 1F and the rear wheels 1R in the front/rear direction.

The rest of the configuration may be same as that of the foregoing embodiment.

(4) In the foregoing embodiment, there was disclosed an exemplary arrangement in which the engine accommodated in the hood 32 is the gasoline engine 30. However, the engine is not limited to the above. For instance, the engine may be a diesel engine, a hybrid type engine or an electric type using an electric motor driven by electric power of a battery mounted.

The rest of the configuration may be same as that of the foregoing embodiment.

(5) In the foregoing embodiment, there was disclosed the exemplary arrangement in which the shielding member 6 includes the first vertical plate portion 60, the upper plate portion 61, the lower plate portion 62 and the second vertical plate portion 63 and the electric components 12 are attached to the first vertical plate portion 60, the lower plate portion 62 and the second vertical plate portion 63 respectively. However, the invention is not limited to this arrangement.

For instance, the electric components 12 may be supported to any appropriate member present inside the electric component accommodating space S, with omission of any one of the upper plate portion 61, the lower plate portion 62 and the second vertical plate portion 63 or addition of a further member. Further, the electric component 12 to be covered by the shielding member 6 is not limited to a fuse, but may be any other component.

The rest of the configuration may be same as that of the foregoing embodiment.

### Industrial Applicability

The present invention is applicable not only to a riding mower, but to various kinds of riding work machine having tire wheels such as a tractor, a transporter vehicle, a forklift, etc.

## Claims

1. A riding work machine comprising:
a vehicle body frame (10) supported by a pair of left and right front wheels (1F) and a pair of left and right rear wheels (1R);
a deck panel (40) mounted on the vehicle body frame;
a driving section (4) having a driver's seat (41) disposed at a front portion of the vehicle body frame and upwardly of the deck panel;
an engine section (3) having an engine (30) accommodated in a hood (32) at a rear portion of the vehicle body frame;
various electric components; and
a battery (50) configured to provide electric power to the electric components,
wherein the electric components are disposed under the deck panel (40) at a laterally outer portion of the vehicle body frame and within a spacing between the front wheels and the rear wheels in a front/rear direction;
between the front wheels (1F) or the rear wheels (1R) and the electric components, there is provided a shielding member (6) configured to suppress falling of scattering water splashed from the front wheels or the rear wheels;
**characterized in that** a battery support portion (5) that is distinct from the shielding member (6) and configured to support the battery (50) is provided under the deck panel (40) at the laterally outer portion of the vehicle body frame and within the spacing between the front wheels and the rear wheels in the front/rear direction; and
the shielding member (6) is located at a portion overlapped with the battery support portion (5) as seen in the plan view and seen in the front/rear direction, and the electric component is disposed between the deck panel (40) and the battery support portion (5) disposed downwardly thereof.

2. The riding work machine of claim 1, wherein:
an upper portion of the shielding member (6) is supported to an attachment member (13) fixed to the vehicle body frame (10); and
a lower portion of the shielding member (6) is fixedly coupled with the battery support portion (5).

3. The riding work machine of claim 1 or 2, wherein:
the shielding member (6) includes a first vertical plate portion (60) which is located in opposition to the font wheel or the rear wheel disposed at a position nearest the electric component, an upper plate portion (61) which covers the electric component from above, a lower plate portion (62) which covers the electric component from under, and a second vertical plate portion (63) disposed at a position opposed to the first vertical plate portion (60) across the upper plate portion and the lower plate portion (62) therebetween;
the shielding member (6) is supported via the second vertical plate portion (63) to the attachment member (13) fixed to the vehicle body frame (10); and
the lower plate portion(62) is provided with a spacing relative to a battery upper face supported to the battery support portion (5).

4. The riding work machine of claim 3, wherein the upper plate portion (61) and the lower plate portion (62) are formed with such obliquely inclined posture that the side thereof near the front wheel or the rear wheel is located with offset toward the machine body outer side away from the vehicle body frame (10) as seen in a plan view, with the side thereof near the second plate portion (63) being located with offset toward the machine body inner side near the vehicle body frame (10) in the left/right direction and with the first vertical plate portion (60) being located with offset toward the machine body outer side near the front wheel or the rear wheel in the left/right direction.

5. The riding work machine of any one of claims 1-4, wherein:
at an outer circumferential edge portion of the deck panel (40), there is provided a pending flange portion (40a) which is bent downwards;
at a portion of the pending flange portion (40a) opposed to the electric component having the front and rear sides and the upper and lower sides thereof surrounded by the shielding member (6), an inspection opening portion (40b) is formed; and
to the inspection opening portion, a lid member (49) is attached to be detachable from the machine body outer side.

## Patentansprüche

1. Aufsitzarbeitsmaschine, umfassend:
einen Fahrzeugkarosserierahmen (10), der von einem Paar linker und rechter Vorderräder (1F) und einem Paar linker und rechter Hinterräder (1R) gestützt wird,
eine Deckplatte (40), die auf dem Fahrzeugkarosserierahmen (10) montiert ist,
einen Fahrbereich (4) mit einem Fahrersitz (41), der an einem vorderen Abschnitt des Fahrzeugkarosserierahmens und oberhalb der Deckplatte angeordnet ist,
einen Motorbereich (3) mit einem Motor (30), der sich in einer Motorhaube (32) an einem hinteren Abschnitt des Fahrzeugkarosserierahmens befindet,
verschiedene elektrische Bauteile und
eine Batterie (50), die dazu ausgelegt ist, die elektrischen Bauteile mit Strom zu versorgen,
wobei die elektrischen Bauteile unter einer Deckplatte (40) an einem seitlich äußeren Abschnitt des Fahrzeugkarosserierahmens (10) und in einem Zwischenraum zwischen den Vorderrädern und den Hinterrädern in einer Vorne-Hinten-Richtung angeordnet sind,
zwischen den Vorderrädern (1F) oder den Hinterrädern (1R) und den elektrischen Bauteilen ein Abschirmelement (6) vorgesehen ist, das dazu ausgelegt ist, das Herabfallen von Streuwasser, das von den Vorderrädern oder den Hinterrädern gespritzt wird, zu unterdrücken,
**dadurch gekennzeichnet, dass** ein Batteriestützabschnitt (5), der von dem Abschirmelement (6) getrennt ist und dazu ausgelegt ist, die Batterie (50) zu stützen, unter der Deckplatte (40) an dem seitlich äußeren Abschnitt des Fahrzeugkarosserierahmens und in dem Zwischenraum zwischen den Vorderrädern und den Hinterrädern in der Vorne-Hinten-Richtung angeordnet ist, und
sich das Abschirmelement (6) an einem Abschnitt befindet, der sich in der Draufsicht gesehen und in der Vorne-Hinten-Richtung gesehen mit dem Batteriestützabschnitt (5) überlappt, und das elektrische Bauteil zwischen der Deckplatte (40) und dem Batteriestützabschnitt (5) angeordnet ist, welcher unterhalb davon angeordnet ist.

2. Aufsitzarbeitsmaschine nach Anspruch 1, wobei:
ein oberer Abschnitt des Abschirmelements (6) an einem Befestigungselement (13) gestützt wird, das an dem Fahrzeugkarosserierahmen (10) befestigt ist, und
ein unterer Abschnitt des Abschirmelements (6) fest mit dem Batteriestützabschnitt (5) verbunden ist.

3. Aufsitzarbeitsmaschine nach Anspruch 1 oder 2, wobei:
das Abschirmelement (6) einen ersten vertikalen Plattenabschnitt (60), der sich gegenüber dem Vorderrad oder Hinterrad an einer Position befindet, die dem elektrischen Bauteil am nächsten ist, einen oberen Plattenabschnitt (61), der das elektrische Bauteil von oben abdeckt, einen unteren Plattenabschnitt (62), der das elektrische Bauteil von unten abdeckt, und einen zweiten vertikalen Plattenabschnitt (63) aufweist, der an einer Position gegenüber dem ersten vertikalen Plattenabschnitt (60) über den oberen Plattenabschnitt und den unteren Plattenabschnitt (62) hinweg, die dazwischen liegen, angeordnet ist,
das Abschirmelement (6) über den zweiten vertikalen Plattenabschnitt (63) an dem Befestigungselement (13) gestützt wird, das an dem Fahrzeugkarosserierahmen (10) befestigt ist, und
der untere Plattenabschnitt (62) mit einem Zwischenraum versehen ist, der relativ zu einer oberen Batteriefläche ist, die an dem Batteriestützabschnitt (5) gestützt wird.

4. Aufsitzarbeitsmaschine nach Anspruch 3, wobei der obere Plattenabschnitt (61) und der untere Plattenabschnitt (62) in einer derart schräg geneigten Stellung ausgebildet sind, dass deren Seite nahe dem Vorderrad oder dem Hinterrad in einer Draufsicht gesehen mit Versatz zu der Außenseite des Maschinengehäuses entfernt von dem Fahrzeugkarosserierahmen (10) angeordnet ist, wobei deren Seite nahe dem zweiten vertikalen Plattenabschnitt (63) mit Versatz zu der Innenseite des Maschinengehäuses nahe dem Fahrzeugkarosserierahmen (10) in der Links-Rechts-Richtung angeordnet ist und wobei der erste vertikale Plattenabschnitt (60) mit Versatz zu der Außenseite des Maschinengehäuses nahe dem Vorderrad oder Hinterrad in der Links-Rechts-Richtung angeordnet ist.

5. Aufsitzarbeitsmaschine nach einem der Ansprüche 1 bis 4, wobei:
an einem äußeren umlaufenden Randbereich der Deckplatte (40) ein Aufhängeflanschteil (40a) vorgesehen ist, der nach unten gebogen ist,
an einem Abschnitt des Aufhängeflanschteils (40a), der dem elektrischen Bauteil gegenüberliegt, dessen Vorder- und Rückseite und Ober- und Unterseite von dem Abschirmelement (6) umgeben sind, ein Inspektionsöffnungsabschnitt (40b) ausgebildet ist, und
ein Deckelelement (49) an dem Inspektionsöffnungsabschnitt (40b) so befestigt ist, dass es von der Außenseite des Maschinengehäuses abnehmbar ist.

## Revendications

1. Machine de travail autoportée comprenant :
un châssis de véhicule (10) supporté par une paire de roues avant gauche et droite (1F) et une paire de roues arrière gauche et droite (1R) ;
une plateforme (40) montée sur le châssis de véhicule ;
une section de conduite (4) ayant un siège (41) de conducteur disposé au niveau d'une partie avant du châssis de véhicule et vers le haut de la plateforme ;
une section de moteur (3) ayant un moteur (30) logé dans un capot (32) au niveau d'une partie arrière du châssis de véhicule ;
différents composants électriques ; et
une batterie (50) configurée pour fournir de l'énergie électrique aux composants électriques,
dans laquelle les composants électriques sont disposés sous la plateforme (40) au niveau d'une partie latéralement externe du châssis de véhicule et à l'intérieur d'un espace entre les roues avant et les roues arrière dans une direction avant/arrière ;
entre les roues avant (1F) ou les roues arrière (1R) et les composants électriques, est prévu un élément de protection (6) configuré pour empêcher la chute de l'eau éclaboussée et dispersée par les roues avant ou les roues arrière ;
**caractérisée en ce qu'**une partie de support de batterie (5) qui est distincte de l'élément de protection (6) et configurée pour supporter la batterie (50), est prévue sous la plateforme (40) au niveau de la partie latéralement externe du châssis de véhicule et à l'intérieur de l'espace entre les roues avant et les roues arrière dans la direction avant/arrière ; et
l'élément de protection (6) est positionné au niveau d'une partie superposée avec la partie de support de batterie (5) dans une vue en plan et observé dans la direction avant/arrière, et le composant électrique est disposé entre la plateforme (40) et la partie de support de batterie (5) disposée vers le bas par rapport à cette dernière.

2. Machine de travail autoportée selon la revendication 1, dans laquelle :
une partie supérieure de l'élément de protection (6) est supportée sur un élément de fixation (13) fixé sur le châssis de véhicule (10) ; et
une partie inférieure de l'élément de protection (6) est couplée, de manière fixe, avec la partie de support de batterie (5).

3. Machine de travail autoportée selon la revendication 1 ou 2, dans laquelle :
l'élément de protection (6) comprend une première partie de plaque verticale (60) qui est positionnée en opposition à la roue avant ou à la roue arrière disposée dans la position la plus proche du composant électrique, une partie de plaque supérieure (61) qui recouvre le composant électrique par dessus, une partie de plaque inférieure (62) qui recouvre le composant électrique par dessous, et une deuxième partie de plaque verticale (63) disposée dans une position opposée à la première partie de plaque verticale (60) par rapport à la partie de plaque supérieure et à la partie de plaque inférieure (62) s'étendant entre celles-ci ;
l'élément de protection (6) est supporté via la deuxième partie de plaque verticale (63), sur l'élément de fixation (13) fixé au châssis de véhicule (10) ; et
la partie de plaque inférieure (62) est prévue avec un espacement par rapport à une face supérieure de batterie supportée sur la partie de support de batterie (5).

4. Machine de travail autoportée selon la revendication 3, dans laquelle la partie de plaque supérieure (61) et la partie de plaque inférieure (62) sont formées dans une position inclinée obliquement de telle sorte que leur côté à proximité de la roue avant ou de la roue arrière, dans une vue en plan, est positionné avec un décalage vers le côté externe de corps de machine à l'opposé du châssis de véhicule (10), leur côté à proximité de la deuxième partie de plaque (63) étant positionné avec un décalage vers le côté interne de corps de machine à proximité du châssis de véhicule (10) dans la direction gauche/droite et la première partie de plaque verticale (60) étant positionnée avec un décalage vers le côté externe de corps de machine à proximité de la roue avant ou de la roue arrière dans la direction gauche/droite.

5. Machine de travail autoportée selon l'une quelconque des revendications 1 à 4, dans laquelle :
au niveau d'une partie de bord circonférentiel externe de la plateforme (40), est prévu une partie de bride pendante (40a) qui est courbée vers le bas ;
au niveau d'une partie de la partie de bride pendante (40a) opposée au composant électrique ayant les côtés avant et arrière et ses côtés supérieur et inférieur entourés par l'élément de protection (6), une partie d'ouverture d'inspection (40b) est formée ; et
sur la partie d'ouverture d'inspection, un élément de couvercle (49) est fixé de manière détachable du côté externe de corps de machine.
